Europäisches Patentamt

European Patent Office

Office européen des brevets

(11) Publication number : **0 638 611 A1**

## (12) EUROPEAN PATENT APPLICATION

(21) Application number : **94305680.4**

(22) Date of filing : **01.08.94**

(51) Int. Cl.[6] : **C08L 23/16**, C08L 23/26,
C10M 143/02, C10M 157/00,
C10M 157/04

(30) Priority : **02.08.93 US 100857**

(43) Date of publication of application :
**15.02.95 Bulletin 95/07**

(84) Designated Contracting States :
**BE DE FR GB NL**

(71) Applicant : **TEXACO DEVELOPMENT
CORPORATION
2000 Westchester Avenue
White Plains, New York 10650 (US)**

(72) Inventor : **Kapuscinski, Maria Magdalena
72 Rambler Road
Carmel, New York 10512 (US)**
Inventor : **Jung, Alfred Karl
17 Ledgewood Commons
Millwood, New York 10546 (US)**
Inventor : **Brugger, Lee Ann
100 Prospect Hill Road
Wallkill, New York 12589 (US)**
Inventor : **Mortier, Mieke
Pannemeerstraat 13
B-8755 Ruiselede (BE)**

(74) Representative : **Green, Mark Charles
Urquhart-Dykes & Lord,
91 Wimpole Street
London W1M 8AH (GB)**

(54) **A dimensionally stable solid polymer blend and a lubricating oil composition containing same.**

(57) A dimensionally stable solid polymer blend comprising :
(1) a partially crystalline ethylene copolymer comprising from 60 to 85 mole percent ethylene, from 15 to 40 mole percent of $C_3$-$C_{10}$ alpha-monoolefin, and from 0 to 10 mole percent of a polyene, having a number average molecular weight from 40,000 to 250,000, and
(2) an amorphous copolymer comprising from 40 to 65 mole percent ethylene, from 35 to 60 mole percent of a $C_3$-$C_{10}$ alpha-monoolefin, and from 0 to 10 mole percent of polyene, having a number average molecular weight ranging from 40,000 to 250,000.

EP 0 638 611 A1

This invention relates to a novel solid dimensionally stable polymer blend which is effective as a VI-improver lubricant additive when employed in a lubricating oil composition.

The art contains many disclosures on the use of ethylene copolymer additives for lubricating oil compositions. Ethylene-propylene copolymers and ethylene-alpha olefin and non-conjugated diene terpolymers, as well as their functionalized derivatized modification are illustrative of this type of oil additive. The use of copolymers as additives in lubricating oils dictates that they possess certain essential properties. The copolymers must be suitably soluble in the oil solution in order to provide the properties intended for the lubricating oil. Additionally, the copolymer must not promote undesired reactions, either with the lubricating oil or with other additive components used in the fully formulated lubricating oil composition.

The basic building blocks of the copolymers of the invention are primarily the monoolefins, such as ethylene, propylene and higher alpha-monoolefins, optionally, with minor amounts of a polyene, i.e., a non-conjugated diene or triene. More specifically, the building blocks comprise ethylene and at least one $C_3$-$C_{10}$ alpha-monoolefin polymerized according to known methods to produce the copolymer or terpolymer additive.

There are many methods for copolymerizing the noted olefins, and the resulting products may vary widely in the specific olefin components, in their molecular weights, and in the physical properties present in the final copolymer product. Amorphous ethylene copolymers have been widely employed as additives for lubricating oil compositions, either in the neat form or after being functionalized and/or derivatized to add additional properties to the additive for incorporation in the lubricating oil formulation. While conventional amorphous copolymers (OCP) and their derivatives show good viscosity index improving properties in lubricating oils they do not possess good dimensional stability at molecular weights suitable for modern premium lubricating oils. An ethylene copolymer that flows under ambient conditions, i.e., is characterized by having cold flow properties, is not dimensionally stable.

Partially crystalline ethylene copolymers are also known and are characterized by having excellent dimensional stability. The dimensional stability of a copolymer is a particularly valuable property for facilitating the shipping or transport (particularly the storage and handling) of a copolymer material. There are, however, drawbacks to the usefulness of the partially crystalline ethylene copolymers as lubricating oil additives. Partially crystalline ethylene copolymers do not provide satisfactory pour points and cold storage properties to lubricating oil compositions. In addition, these partially crystalline ethylene copolymers require elevated temperatures for handling and storage. They also require special blending conditions in order to be useful in a lubricating oil.

U.S. 3,697,429 discloses a lubricant composition containing low ethylene content and high ethylene content ethylene-alpha-olefin copolymers.

U.S. 4,863,623 discloses amorphous ethylene copolymers, as well as their derivatized and functionalized extensions, as useful additives in a lubricating oil composition. The disclosure in this patent which relates to a VI-improver, dispersant, and antioxidant additive for lubricating oils is incorporated herein by reference.

The following patents illustrate the development of ethylene copolymer lubricating oil additives as well as their functionalized and derivatized modifications, to wit: U.S. 3,316,177, 3,697,429, 4,089,794, 4,146,489; 4,219,422; 4,234,435; 4,235,731; 4,320,019, 4,505,834 and 4,507,515.

Both the amorphous and the partially crystalline ethylene copolymer lubricating oil additives may be referred to as olefin copolymers (OCP). Similar, the functionalized and derivatized amorphous and the partially crystalline ethylene copolymer oil additives may be referred to as dispersant olefin copolymers, (DOCP).

An object of the invention is to provide a novel solid dimensionally stable ethylene copolymer blend useful as a lubricant additive.

Another object of the invention is to provide an ethylene copolymer blend comprising at least two types of ethylene copolymers including an amorphous ethylene copolymer and a partially crystalline ethylene copolymer.

A further object of the invention is to provide an ethylene copolymer blend comprising a partially crystalline ethylene copolymer and an amorphous ethylene copolymer free of cold flow properties.

Another object is to provide functionalized and derivatized ethylene copolymer blends that are dimensionally stable and effective as multifunctionally lubricating oil additives.

Another object is to provide novel lubricating oil compositions.

The solid dimensionally stable polymer blend of the present invention comprises: (1) a partially crystalline ethylene copolymer comprising 60 mol % or over, preferably from 60 to 85 mol % of ethylene, up to 40 mol %, preferably from 15 to 40 mol % of a $C_3$-$C_{10}$ alpha-monoolefin, preferably propylene, and optionally from 0 to 10 mol % of a non-conjugated diene or triene, having a number average molecular weight ranging from 40,000 to 250,000, and preferably a molecular weight distribution (MWD) from 1.2 to 7, and (2) an amorphous copolymer comprising from 40 to 65 mol % ethylene, from 35 to 60 mol % of a $C_3$-$C_{10}$ alpha-monoolefin, and optionally from 0 to 10 mol % of a non-conjugated diene or triene, having a number average molecular weight ranging from 40,000 to 250,000, preferably 50,000 to 150,000, with preferably a molecular weight distribution ranging from 1.2 to 7.

The partially crystalline ethylene copolymer and the amorphous ethylene copolymer components of the solid dimensionally stable polymer blend of the invention may be prepared from ethylene and propylene, or it may be prepared from ethylene and a higher olefin within the range of $C_3$-$C_{10}$ alpha-monoolefins. Mixtures of the $C_3$-$C_{10}$ alpha-monoolefins with ethylene may also be employed.

Complex polymer substrates, often designated as interpolymers, are prepared using one or more additional components. A third component generally used to prepare an interpolymer substrate is a polyene monomer selected from a non-conjugated diene or triene. The non-conjugated diene component is one having from 5 to 14 carbon atoms in the chain. Preferably, the diene monomer is characterized by the presence of a vinyl group in its structure and can include cyclic and bicyclo compounds. Representative dienes include 1,4-hexadiene, vinyl norbornene, ethylene norbornene, 1,4-cyclohexadiene, dicyclopentadiene, 5-ethylidene-2-norbornene, 5-methylene-2-norbornene, 1,5-heptadiene, and 1,6-octadiene. Representative trienes include 1-isopropylidene-3a,4,7,7a-tetrahydroindene, 1-isopropylidenedicyclopentadiene, dehydroisodicyclopentadiene, and 2-(2-methylene-4-methyl-3-pentenyl) [2.2.1]bicyclo-5-heptene. A mixture of more than one polyene can be used in the preparation of the interpolymer. In general, the polymers employed are prepared according to Ziegler-Natta polymerization methods.

A partially crystalline ethylene copolymer may be produced when the ethylene content employed in the reaction is above 60 mole percent ethylene. The balance of the reactants will be from up to 40 mole percent of a $C_3$-$C_{10}$ alpha-monoolefin, and from 0 to 10 mole percent of a non-conjugated polyene component. The partially crystalline ethylene copolymer will be characterized by having at least 3 weight percent crystallinity up to 15 weight percent crystallinity and have a number average molecular weight ranging from about 40,000 to 250,000. Preferably, the partially crystalline ethylene copolymer has from 4 to 12 weight percent crystallinity component and a molecular weight ranging from 50,000 to 150,000. A still more preferred partially crystalline ethylene copolymer will comprise 75 to 85 mole percent ethylene with the balance being from 15 to 25 mole percent of a $C_3$-$C_{10}$ monoolefin and from 0 to 1 mole percent of a polyene and have a molecular weight from 60,000 to 100,000 and from about 5 to 10 weight percent crystallinity. Crystallinity of the ethylene copolymer throughout is understood to mean weight percent crystallinity.

The partially crystalline ethylene copolymer may have a molecular weight distribution ranging preferably from 1.2 to 7 or preferably from 1.4 to 3. Still more preferably, the molecular weight distribution will range from 1.6 to 2.5. Molecular weight distribution refers to the ratio of weight average molecular weight (Mw) over number average molecular weight (Mn). The presence of at least one partially crystalline ethylene copolymer as prescribed above is critical in order to prepare a dimensionally stable polymer blend. The partially crystalline ethylene copolymer may be functionalized and derivatized as described below.

The amorphous copolymer is prepared from ethylene and at least one $C_3$-$C_{10}$ alpha-monoolefin and, optionally, a polyene selected from non-conjugated dienes and trienes comprising from 40 to 65 mole percent ethylene, from 35 to 60 mole percent of a $C_3$-$C_{10}$ alpha-monoolefin, and from 0 to 10 mole percent of a polyene and will have a molecular weight ranging from 40,000 to 250,000. Preferably, the amorphous copolymer is prepared from ethylene, propylene and from 0 to 2 mole percent of the prescribed polyene, and will have a number average molecular weight ranging from 50,000 to 150,000. Still more preferred, the amorphous ethylene copolymer will have a molecular weight from 60,000 to 100,000.

The amorphous ethylene copolymer may have a molecular weight distribution ranging preferably from 1.2 to 7 with the preferred range being from 1.4 to 3, and still more preferred range of 1.6 to 2.5. Amorphous ethylene copolymers having a molecular weight between 40,000 and 250,000 are characterized by having cold flow properties. The term cold flow property refers to the fact that the prescribed amorphous ethylene copolymer will flow and not keep its shape under ambient conditions. In others words, it is not a dimensionally stable solid and cannot be shipped or transported as a solid. However, these amorphous copolymers are effective in dimensionally stable blends for removing the serious deficiencies that are found in the partially crystalline ethylene copolymers for use as lubricant additives. The amorphous ethylene copolymer may be functionalized and derivatized as described below.

The terms "polymer" and "copolymer" are used generically herein to encompass ethylene copolymers and ethylene terpolymers. The molecular weights given throughout are Number Average Molecular Weights as determined by Gel Permeation Chromatography (GPC).

Dimensionally stable solid polymer blends of functionalized and/or derivatized partially crystalline ethylene copolymers and of amorphous ethylene copolymers may be prepared according to the practice of this invention. In general, ethylene copolymers are grafted with an ethylenically unsaturated reactive compound in order to make the grafted copolymer amendable to a reaction with an amine compound and thus produce a multifunctional derivatized copolymer. Suitable ethylenically unsaturated compounds for imparting reactivity onto an ethylene copolymer include maleic anhydride, fumaric anhydride, glycidyl methacrylate, allyl glycidyl ether, vinylbenzylchloride, vinyl azlactone and crotonaldehyde.

The grafted ethylene copolymers may be reacted with a wide range of organic compounds to produce a grafted and derivatized ethylene copolymer which is useful as a multifunctional lubricating oil additive.

A broad range of amines including monoamines, polyamines and hydroxyamines having a reactive primary or secondary amino group may be employed to derivatize the grafted ethylene copolymers of the invention. Suitable amines include aliphatic, cycloaliphatic, aromatic, and heterocyclic amines, including aliphatic-substituted cycloaliphatic, aliphatic-substituted aromatic, and aliphatic-substituted heterocyclic amines. Suitable amines include N-aminoethyl piperazine, dimethylaminopropylamine, pyrrolidine and N-methyl morpholine.

Particularly useful amines are the amino-aromatic polyamines from the class consisting of N-arylphenylenediamines, e.g., N-phenylphenylenediamine, aminothiazoles, aminocarbazoles, amino-indazolinones, aminomercaptotriazoles, and aminopyrimidines.

Derivatized ethylene copolymers may also be prepared by grafting or reacting the prescribed ethylene copolymers with a vinyl-containing compound. Suitable vinyl compounds comprise the class consisting of N-vinylpyridines, N-vinylpyrrolidones, vinylcarbazoles, vinylimidazoles, vinylthiazoles and allylamines. Specific compounds within this class includes 2-vinylpyridine, N-vinylpyrrolidone, 1-vinylimidazole, allylamine, 4-methyl-5-vinylthiazole and 9-vinylcarbazole.

A number of solid ethylene copolymer blends were prepared by varying copolymer structures, functionality (non-dispersant olefin copolymer (OCP) or dispersant copolymer (DOCP)), molecular weights and composition. Amorphous non-dispersant copolymers or dispersant olefin copolymers were blended with a prescribed partially crystalline olefin copolymer consisting of approximately 60-85 mole percent ethylene. The dimensional stability of the solid blends and the physical properties of solutions of the blends in oil were determined.

Blends of a partially crystalline copolymer with an amorphous copolymer can be prepared by various methods. One method is to mix solutions of the two types of copolymers and then to devolatilize the mixed solutions to produce a solid copolymer blend. Another method is to mix two types of solid polymers, referred to as rubbers, in a masticator, Brabender Mixer, or an extruder. In the solution/devolatilization procedure, the solvent from the solution of the partially crystalline ethylene copolymer rubber and of the amorphous ethylene copolymer rubber is removed by evaporation.

The blend may contain from 10 to 70 wt.%, preferably 20 to 50 wt.%, of partially crystalline copolymer and from 30 to 90 wt.%, preferably 50 to80 wt.%, of amorphous copolymer.

A method for preparing a dimensionally stable and shear stable olefin copolymers blend involves reducing the molecular weight of the non-shear stable (high molecular weight) ethylene copolymers components of the copolymer blend which are generally the high molecular weight partially crystalline and amorphous ethylene copolymer prescribed above. Various methods for reducing the molecular weight of the polymers known to the art including mixing polymers under elevated temperatures in a soft or melt state in a mastificator (for example, a Bramley-Beker mixer) Brabender Mixer or extruder. A high temperature heating method or ultra sonic agitation can also be employed.

In the high temperature molecular weight reduction heating of a copolymer blend, solid pieces of the partially crystalline ethylene copolymer and of the amorphous ethylene copolymer (typically partly crosslinked ethylene-propylene-diene terpolymer (EPDM)) are charged to a high pressure reactor containing a solvent, such as n-hexane, n-heptane, hexadecane or other suitable hydrocarbon solvent for polymers. This mixture is stirred at from about 130-150°C under nitrogen pressure of about 1.38 MPa (200 psi) until the polymers are completely dissolved. The temperature is then raised to about 290-330°C and the mixture is stirred from 0.5-2 hours under the above conditions. The solvent is then removed by evaporation under vacuum. The resultant solid polymer blends produced are tested for dimensional stability and for their solution properties in oil.

Oil concentrates of the dimensionally stable polymer blend are prepared as follows:

A base oil or a mineral lubricating oil or synthetic oil is heated to 27-150°C (80-300°F) in a vessel equipped with a mechanical stirrer and a heating jacket. Pieces of the polymer blend, generally 12mm cubes, are charged gradually to the oil forming a mixture. The mixture is stirred at 27-150°C (80-300°F) until the rubber is completely dissolved, which may require from 1-24 hours. The polymer content may be adjusted to a required viscosity level.

## EXAMPLES

The following tests were conducted on the solid ethylene copolymer rubber blends or on their oil concentrates:

## Dimensional Stability Test

A 25mm cube of the solid ethylene copolymer rubber is placed between two 75 x 75mm aluminum plates at 25°C temperature. A 100 gram weight is placed on the upper plate for a period of seven (7) days. Any changes in the dimension of the polymer cubes with time is observed and described as follows:

excellent    - no change
good       - slight change
fair        - significant change
poor      - flows

## Crystallinity

The crystallinity percent of polymers was determined by Differential Scanning Colorimetry (DSC)

## Shear Stability Index

Shear Stability Index (SSI) is determined as

$$SSI = \frac{Vbs - Vas}{TP} \times 100\%$$

where

Vbs and Vas are defined as the viscosities of polymer solution before and after shearing, respectively.

TP is defined as thickening power which is determined by the difference between Vbs and the viscosity of the solvent.

The (Vbs - Vas) is viscosity loss determined according to the ASTM Method D-3945 (Proc. A).

## Molecular Weight

The molecular weights of polymers were determined by Gel Permeation Chromatography, where:

Mw       - weight average molecular weight
Mn        - number average molecular weight
Mw/Mn   - molecular weight distribution

## Bench Dispersancy

A sample VI-improver being tested is blended into a formulated oil which does not contain any dispersant to make a 10 weight percent solution of the VI improver in the formulated oil. This oil solution is then tested for dispersancy in the Bench Dispersancy Test.

In the Bench Dispersancy Test, the dispersancy of the experimental oil is compared to that of three reference oil standards which give excellent, good, and fair results in the test. The numerical value of a test result decreases with an increase in dispersant activity. A value above 150 indicates that the sample provides no dispersancy.

## Cold Storage Behavior of VI-Improvers

The cold storage behavior of a motor oil containing the VI-improvers being tested was determined by utilizing the ultra low temperature environmental chamber (Thermotron S-AC). This test allows for the determination of the stability of the formulation under cold temperature conditions. An 18-hour cold temperature cycle was employed with the temperatures ranging between -51 and -15°C (-60 and 4°F). The samples were examined at -12°C (10°F), after eight weeks of storage under the noted conditions.

## EXAMPLE I

Polymer blends were prepared using different ratios of a partially crystalline random ethylene copolymer, designated Polymer A, and of an amorphous ethylene copolymer designated, Polymer B. The resulting blends were tested for stability in the Dimensional Stability Test in comparison to the individual copolymers, Polymer A and Polymer B, as references.

For the Dimensional Stability Test, the copolymers are prepared in a solid form. Both for the blends and for the individual reference copolymers, the materials were dissolved in n-heptane at 60°C for eight hours at a temperature of 65°C (150°F) in a mixer equipped with a mechanical stirrer, reflux condenser and heating jacket. The heptane from the solution of the polymers was removed by evaporation under vacuum. A 25mm cube was formed from the polymer blend residue and cooled to room temperature.

Polymer A was a partially crystalline ethylene-propylene-diene terpolymer containing approximately 77-80 mole percent ethylene, about 0.1-0.5 mol % vinyl norbornene, and the balance propylene, having a number average molecular weight as measured by GPC of approximately 100,000, a molecular weight distribution of approximately 1.6, and a crystallinity of about 8%.

Polymer B was an amorphous copolymer containing approximately 56-62 mole percent ethylene and the balance propylene, having a number average molecular weight as measured by GPC of about approximately 70,000, and a molecular weight distribution of approximately 1.8.

Blends of Polymer A and of Polymer B were prepared and tested for their Dimensional Stability against Polymer A and Polymer B as the references standards. The results are set forth in Table 1 below.

Table 1

| Dimensional Stability Test | | | |
|---|---|---|---|
| | Polymer A | Polymer B | |
| Run | Wt.% | Wt.% | Dimensional Stability |
| 1 (reference) | 100 | 0 | Excellent |
| 2 | 35 | 65 | Excellent |
| 3 | 30 | 70 | Good |
| 4 | 20 | 80 | Poor |
| 5 (reference) | 0 | 100 | Poor |

EXAMPLE II

A partially crystalline ethylene copolymer, designated Polymer C, containing 77-80 mole percent ethylene, and the balance propylene, having a number average molecular weight of approximately 90,000, a molecular weight distribution of approximately 1.9, and a crystallinity of about 7% was tested.

Blends of Polymer C and of Polymer B from Example I were prepared and tested for their Dimensional Stability against Polymer C and Polymer B as the references standards. The results are set forth in Table 2 below.

Table 2

| Dimensional Stability Test | | | |
|---|---|---|---|
| | Polymer C | Polymer B | |
| Run | Wt.% | Wt.% | Dimensional Stability |
| 6 (reference) | 100 | 0 | Excellent |
| 7 | 40 | 60 | Excellent |
| 8 | 30 | 70 | Good |
| 9 | 20 | 80 | Poor |
| 10 (reference) | 0 | 100 | Poor |

EXAMPLE III

A partially crystalline ethylene copolymer, designated Polymer D, containing 77-80 mole percent ethylene, 0.1 to 0.5 mol % vinyl norbornene, and the balance propylene, having a number average molecular weight of approximately 210,000, a molecular weight distribution of approximately 1.9, and a crystallinity of about 9% was tested as follows:

Three different blends of Polymer D and of Polymer B from Example I were prepared. The blends were tested for their dimensional stability against Polymer D and Polymer B as references standards. The results are set forth in Table 3 below.

Table 3

| Dimensional Stability Test | | | |
|---|---|---|---|
| | Polymer D | Polymer B | |
| Run | Wt.% | Wt.% | Dimensional Stability |
| 11 (reference) | 100 | 0 | Excellent |
| 12 | 20 | 80 | Excellent |
| 13 | 12 | 88 | Good |
| 14 | 9 | 91 | Poor |
| 15 (reference) | 0 | 100 | Poor |

EXAMPLE IV

A dispersant amorphous ethylene copolymer, designated Polymer E, was prepared containing 56-62 mole percent ethylene, 40-35 mole percent propylene, and about 3 mol % of pendant N-vinylpyrrolidone units, and having a number average molecular weight of about 70,000, and a molecular weight distribution of approximately 2. The test results are set forth in Table 4 below.

Polymer A from Example I was used in forming blends.

Table 4

| Dimensional Stability Test | | | |
|---|---|---|---|
| | Polymer A | Polymer E | |
| Run | Wt.% | Wt.% | Dimensional Stability |
| 16 (reference) | 100 | 0 | Excellent |
| 17 | 30 | 70 | Excellent |
| 18 | 20 | 80 | Excellent |
| 19 | 10 | 90 | Fair |
| 20 (reference) | 0 | 100 | Poor |

EXAMPLE V

An ethylene copolymer, designated Polymer F was an amorphous copolymer containing approximately 56-62 mole percent ethylene, about 0.3-2.0 mol % diene, and the balance propylene, having a number average molecular weight as measured by GPC of about 100,000, and a molecular weight distribution for approximately 5.0.

EP 0 638 611 A1

The polymer F is dimensionally stable due to crosslinking effects associated with use of diene. As a result, this material shows high molecular weight distribution. Its shear stability as measured by the Shear Stability Test in solution in oil is low i.e. a Shear Stability Index above 50.

Polymer D from Example III and Polymer F were blended together in a ratio of 40/60 wt% by dissolution in hexadecane. This mixture was stirred at from about 140-150°C under nitrogen pressure of about 1.38 MPa (200 psi) until the polymers were completely dissolved. The temperature was then raised to about 300-310°C and the mixture was stirred for 1 hour under the above conditions. The solvent was removed by evaporation under vacuum. The resultant solid polymer blend was tested for dimensional stability and for its solution properties in oil. The properties of this blend were compared to reference. Sample 22 which is Polymer F processed to a similar molecular weight by using the same operating conditions. The results are set forth in Table 5 below.

## Table 5

### Dimensional Stability Test for Heated Polymers

| Run | Polymer D Wt.% | Polymer F Wt.% | Dimensional Stability * |
|-----|------|------|-------------|
| 21 | 40 | 60 | Excellent |
| 22 (reference) | 0 | 100 | Poor |

\* samples after heating

Table 6 is a further comparison of the properties of polymers.

8

TABLE 6

| Properties of Polymers | | | | |
|---|---|---|---|---|
| | Molecular Weight | | Shear Stability | Dimensional Stability |
| | Mn | Mw/Mn | Index | |
| POLYMER D | | | | |
| Before Heating | 210,000 | 1.9 | 55 | Good |
| POLYMER F | | | | |
| Before Heating | 100,000 | 5.0 | 48 | Good |
| After Heating | 75,000 | 2.4 | 22 | Poor |
| POLYMER BLEND D/F | | | | |
| Before Heating | 144,000 | 3.7 | 51 | Good |
| After Heating | 75,400 | 2.1 | 20 | Good |

The foregoing examples illustrate that copolymer blends prepared from a mixture of a partially crystalline ethylene copolymer and an amorphous copolymer have excellent dimensional stability as opposed to amorphous copolymers which exhibit poor dimensional stability.

In Examples VI through X below the solid ethylene copolymers described in the previous examples were dissolved in a solvent neutral oil having an SUS at 100°F of 100. These solutions were then diluted with a pour depressed solvent neutral oil having an SUS at 100°F of 130 to form an oil solution having a Kinematic Viscosity of about 11.5 cSt. The oil solution of the ethylene copolymer blends were then compared to the reference copolymers for Shear Stability, Cold Cranking, and Pour Point, according to ASTM methods.

For Cold Storage Stability Test, 10W-40 SG/CD multigrade oils containing about 13 wt% of a viscosity index improver (Polymer solution in SNO-100) were prepared. The preferred range of VI improver in the lubricating oil may range from 5-25 wt.%.

EXAMPLE VI

## Oil Solution Properties

| Sample: | Polymer A | Blend Run 2 | Polymer B |
|---|---|---|---|
| Kinetic Viscosity 100°C, cSt ASTM D-445 | 11.5 | 11.5 | 11.5 |
| Shear Stability Index (SSI)* ASTM D-3495 (A) | 23 | 23 | 23 |
| Cold Cranking Simulator (CCS) -25°C ASTM D-2602 | 2800 | 3600 | 3700 |
| Pour Point, °C ASTM D-97 | -27 | -30 | -36 |
| Cold Storage 10W-40 oil | Poor | Good | Good |

\* See description on page 10.

EXAMPLE VII

## Oil Solution Properties

| Sample: | Polymer C | Blend Run 7 | Polymer B |
|---|---|---|---|
| Kinetic Viscosity 100°C, cSt ASTM D-445 | 11.5 | 11.5 | 11.5 |
| Shear Stability Index (SSI)* ASTM D-3495 (A) | 29 | 27 | 23 |
| Cold Cranking Simulator (CCS) -25°C ASTM D-2602 | 3100 | 3400 | 3700 |
| Pour Point, °C ASTM D-97 | -30 | -33 | -36 |
| Cold Storage Stability 10W-40 oil | Poor | Good | Good |

\* See description on page 10.

EXAMPLE VIII

## Oil Solution Properties

| Sample: | Polymer D | Blend Run 12 | Polymer B |
|---|---|---|---|
| Kinetic Viscosity 100°C, cSt ASTM D-445 | 11.5 | 11.5 | 11.5 |
| Shear Stability Index (SSI) * ASTM D-3495 (A) | 55 | 30 | 23 |
| Cold Cranking Simulator (CCS) -25°C ASTM D-2602 | 2900 | 3400 | 3700 |
| Pour Point, °C ASTM D-97 | -30 | -33 | -36 |
| Cold Storage Stability 10W-40 oil | Poor | Good | Good |

\*   See description on page 10.

EXAMPLE IX

## Oil Solution Properties

| Sample: | Polymer A | Blend Run 17 | Polymer E |
|---|---|---|---|
| Kinetic Viscosity 100°C, cSt ASTM D-445 | 11.5 | 11.5 | 11.5 |
| Shear Stability Index (SSI)* ASTM D-3495 (A) | 23 | 22 | 23 |
| Cold Cranking Simulator (CCS) -25°C ASTM D-2602 | 2800 | 3400 | 3800 |
| Pour Point, °C ASTM D-97 | -27 | -30 | -36 |
| Cold Storage Stability 10W-40 oil | Poor | Good | Good |
| Bench Dispersancy | Poor | Good | Good |

\*    See description on page 10.

EXAMPLE X

## Oil Solution Properties

| Sample: | Polymer F | Blend Run 21 | Blend Run 22 |
|---|---|---|---|
| Kinetic Viscosity 100°C, cSt ASTM D-445 | 11.5 | 11.5 | 11.5 |
| Shear Stability Index (SSI)* ASTM D-3495 (A) | 48 | 21 | 20 |
| Cold Cranking Simulator (CCS) -25°C ASTM D-2602 | 3650 | 3550 | 3800 |
| Pour Point, °C ASTM D-97 | -36 | -30 | -33 |
| Cold Storage Stability 10W-40 oil | Good | Good | Good |

\*  See description on page 10.

Examples I-VI illustrate that the novel blends of this invention, i.e., of a crystalline ethylene copolymer with an amorphous ethylene copolymer provide new solid blends with excellent dimensional stability. The dimensional stability vs composition depends upon both molecular weight and composition of the polymers.

Examples VI- X illustrate that these solid polymer blends give motor oils with a Shear Stability Index below 30 and also provide good low temperature properties.

## Claims

1. A dimensionally stable solid polymer blend comprising:
   (1) a partially crystalline ethylene copolymer comprising from above 60 mole percent ethylene, up to 40 mole percent of a $C_3$-$C_{10}$ alpha-monoolefin, and optionally from about 0 to 10 mole percent of a non-conjugated diene or triene, having a number average molecular weight from 40,000 to 250,000; and (2) an amorphous copolymer comprising from 40 to 65 mole percent ethylene, from 35 to 60 mole percent of a $C_3$-$C_{10}$ alpha-monoolefin, and optionally from 0 to 10 mole percent of a non-conjugated diene or triene, having a number average molecular weight ranging from 40,000 to 250,000.

2. A dimensionally stable polymer blend as claimed in Claim 1, in which said partially crystalline copolymer has from 3 to 15 weight percent crystallinity.

3. A solid polymer blend as claimed in Claim 1 or Claim 2, in which said partially crystalline copolymer and said amorphous copolymer have a molecular weight distributions ranging from 1.2 to 7.

4. A solid polymer blend as claimed in any preceding claim, containing from 10 to 70 weight percent of said partially crystalline copolymer.

5. A solid polymer blend as claimed in any preceding claim, in which said amorphous ethylene copolymer is characterized by having cold flow properties.

6. A solid polymer blend as claimed in any preceding claim, in which at least one of said partially crystalline ethylene copolymer and said amorphous ethylene copolymer is derivatized.

7. A solid polymer blend as claimed in Claim 6, in which at least one of said partially crystalline ethylene copolymer and said amorphous ethylene copolymer is derivatized with a nitrogen-containing vinyl compound having from about 3 to 24 carbon atoms selected from N-vinylpyridines, N-vinylpyrrolidones, vinylcarbazoles, vinylimidazoles, vinylthiazoles and allylamines.

8. A solid polymer blend as claimed in Claim 6, in which at least one of said partially crystalline ethylene copolymer and said amorphous ethylene copolymer is derivatized with a reactive monomer capped with an amine.

9. A lubricating oil composition comprising an oil of lubricating viscosity and a viscosity index improving amount of the dimensionally stable solid polymer blend of Claim 1.

EP 0 638 611 A1

**European Patent Office**

## EUROPEAN SEARCH REPORT

Application Number

EP 94 30 5680

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X | US-A-4 833 194 (KUAN ET AL.) <br> * the whole document * | 1,4,5 | C08L23/16 <br> C08L23/26 <br> C10M143/02 <br> C10M157/00 <br> C10M157/04 |
| D,Y | GB-A-1 337 475 (ESSO) <br> * the whole document * | 1-6,8,9 | |
| P,Y | WO-A-94 13763 (EXXON) <br> * claim 4 * | 1-6,8,9 | |
| Y | DE-A-18 08 622 (ESSO) <br> * claims 1,3,4 * | 1-5,9 | |
| A | EP-A-0 171 167 (EXXON) <br> * the whole document * | 1-9 | |
| A | FR-A-2 649 408 (SANYO) <br> * the whole document * | 1-9 | |
| A | EP-A-0 428 153 (HIMONT) <br> * claim 1 * | 1-5 | |
| A | FR-A-2 383 225 (SHELL) <br> * the whole document * | 1-9 | **TECHNICAL FIELDS SEARCHED (Int.Cl.6)** <br><br> C10M <br> C08L |
| A | US-A-4 464 493 (JOFFRION) <br> * the whole document * | 7 | |
| A | EP-A-0 026 613 (COPOLYMER RUBBER& CHEMICAL CORP.) <br> * page 6, paragraph 3 * | 1-9 | |
| A | WO-A-87 03610 (EXXON) <br> * claims 1-66 * | 1 | |

The present search report has been drawn up for all claims

| Place of search | Date of completion of the search | Examiner |
|---|---|---|
| THE HAGUE | 2 December 1994 | De La Morinerie, B |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

16